# EUROPÄISCHE PATENTSCHRIFT

(11) **EP 0 721 017 B1**
(45) Veröffentlichungstag und Bekanntmachung des Hinweises auf die Patenterteilung: **31.03.1999**
(21) Anmeldenummer: 95120316.5
(22) Anmeldetag: 21.12.1995
(51) Int. Cl.: C22B 34/34, C22B 34/36

(54) **Verfahren zur Herstellung von reinen Lösungen des Wolframs und Molybdäns**
Process for preparing pure solutions of tungsten and molybdenum
Procédé de préparation de solutions pures de tungstène et de molybdène

(30) Priorität: 03.01.1995 DE 19500057
(43) Veröffentlichungstag der Anmeldung: 10.07.1996
(73) Patentinhaber: H.C. Starck GmbH & Co. KG, 38642 Goslar (DE)
(72) Erfinder: Gutknecht, Wilfried, Dr., D-38642 Goslar (DE); Mathy, Wolfgang, D-38685 Langelsheim (DE)
(74) Vertreter: Steiling, Lothar, Dr.

(56) Entgegenhaltungen:
- EP-A- 0 192 426
- EP-A- 0 219 787
- EP-A- 0 389 661
- DATABASE WPI Section Ch, Week 9518 Derwent Publications Ltd., London, GB; Class L02, AN 95-137730 XP002000732 & SU-A-1 836 466 (REFRACTORY METALS & HARD ALLOYS RES INST) , 23.August 1993
- DATABASE EPODOC, EPO; PN CN1084575 XP002000731 & CN-A-1 084 575 (UNIV ZHONGNAN POLYTECHNIC) 30.März 1994

## Beschreibung

Die vorliegende Erfindung betrifft ein Verfahren zur Herstellung reiner Wolfram- und/oder Molybdän-Lösungen, die mit Tantal, Niob, Titan, Aluminium, Zinn, Arsen, Phosphor und Silizium verunreinigt sind.

Aus Wolfram- und/oder Molybdän-haltigen Ausgangsmateralien wie Erzen, Schrott, Recycling-Materialien können durch verschiedene Aufschlußverfahren mit Alkalien wie Drucklaugung, Kalzination oder Schmelzaufschluß Alkali-Metallat-Lösungen erhalten werden. Diese alkalischen Lösungen mit pH-Werten von 13 bis 14 enthalten - je nach Ausgangsmaterial - Verunreinigungen durch Tantal, Niob, Titan, Zinn, Arsen, Phosphor, Silizium und/oder Aluminium.

Bisher wurden diese Verunreinigungen durch Absenkung des pH-Wertes auf 8 bis 10 mit Mineralsäuren ausgefällt, Arsen und Phosphor auch durch Zusatz von Magnesium- und/oder Aluminium-Salzen.

Gemaß der EP-A 219 787 besteht eine weitere Möglichkeit zur pH-Absenkung in der sogenannten elektrolytischen Absäuerung. Durch die in den Aufschlußlaugen vorhandenen Verunreinigungen gibt es allerdings Probleme bei der hier beschriebenen Membranelektrolyse durch Bedeckung der Anode und Verstopfen der Membranen durch Fallungen und Abscheidungen, insbesondere in stärker verunreinigten Lösungen.

Die pH-Einstellung mit Mineralsäuren hat den Nachteil, daß eine große Menge von Neutralsalzen entsteht, die am Ende des Verarbeitungsweges entsorgt werden müssen.

Aber auch bei der Fällung von Phosphor, Arsen und Silizium durch Zusatz von Magnesium- und/oder Aluminium-Salzen bei ca. pH 9 fallen Fremdsalze an, die eine zusätzliche unerwünschte Salzfracht in den Abwässern darstellen. Arsen laßt sich darüber hinaus nicht vollständig abtrennen.

Es ist daher die Aufgabe der Erfindung, eine Methode zur Reinigung von alkalischen Molybdat- und/oder Wolfram-Aufschlußlösungen zur Verfügung zu stellen, die speziell mit Tantal, Niob, Titan, Zinn, Arsen, Phosphor, Silizium verunreinigt sind. Solche Lösungen sollen ohne den Zusatz von Fremdsalzen und Mineralsäuren zu reinen Molybdän- und/oder Wolframat-Lösungen verarbeitet werden.

Erfindungsgemäß wurde nun durch die Aufeinanderfolge von drei Verarbeitungsstufen ein umweltfreundliches Verfahren gefunden, das es ermöglicht, aus alkalischen Aufschlußlösungen reine Wolfram- und Molybdän-Verbindungen herzustellen, die als Ausgangsmaterial für die Gewinnung reiner Metalle und/oder Metallverbindungen geeignet sind:
- in der ersten Stufe eine pH-Absenkung durch Einleitung von CO₂-Gas,
- in der zweiten Stufe ein Anionen-Austausch-Verfahren und
- in der dritten Stufe eine Membranelektrolyse.

Gegenstand dieser Erfindung ist somit ein Verfahren gemäß Patentanspruch 1 zur Herstellung reiner Wolfram- und/oder Molybdän-Lösungen aus alkalischen Aufschlußlösungen, die mit Tantal, Niob, Titan, Zinn, Arsen, Phosphor, Silizium verunreinigt sind.

Der dritten Verfahrensstufe kann vorzugsweise eine weitere Nachbehandlung der Metallatlösungen durch Solventextraktion nachgeschaltet werden, um beispielsweise Ammoniumsalze der Wolfram- bzw. Molybdänsäure in reiner Form zu gewinnen.

Das erfindungsgemäße Verfahren liefert keine - oder aber stark verminderte - Mengen der Neutralsalze Na₂SO₄, NaCl und es ermöglicht außerdem, die für den Aufschluß der Rohstoffe eingesetzte NaOH und das zum Neutralisieren benötigte CO₂-Gas in den Prozeßkreislauf wieder einzusetzen.

Bei der CO₂-Begasung und Vorreinigung in der ersten Stufe werden verunreinigte Alkali-Metallat-Lösungen aus dem Alkali-Aufschluß mit CO₂ bis zu einem pH-Wert zwischen 8 und 10 begast. In diesem pH-Bereich fallen die Elemente Aluminium, Zinn, Silizium, Tantal, Niob und Titan bereits teilweise aus und können durch Filtrieren abgetrennt werden.

In der nachfolgenden Reinigung durch Ionenaustausch können aus dem Filtrat zusätzlich bei pH 8 mit einem schwach basischen Anionen-Austauscher die verbliebenen Verunreinigungen von Arsen, Phosphor und Silizium sowie die Reste der oben genannten Elemente weitgehend abgetrennt werden. So lassen sich z.B. aus Wolfram-Laugen die Verunreinigungen Arsen, Phosphor und Silizium nahezu vollständig abtrennen. Diese Abtrennung ist damit deutlich wirksamer als bei der Fällung mit Magnesium- oder Aluminium-Zusatz.

In der anschließenden Membranelektrolyse zur Absäuerung kann dann die von Tantal, Niob, Titan, Zinn, Arsen, Phosphor und Silizium befreite Lösung mittels der Membranelektrolyse bis in einen sauren pH-Bereich angesäuert werden. Dabei kommen insbesondere kationenselektive Membranen zum Einsatz.

Auf der Kathodenseite wird in vorteilhafter Weise Natronlauge zurückgewonnen, die beim Aufschluß der Rohstoffe wieder eingesetzt werden kann.

Wegen des Absinkens des pH-Wertes auf < 7 auf der Anodenseite kann hier auch CO₂ zurückgewonnen und in den Kreislauf zurückgeführt werden.

Gegebenenfalls kann eine Nachreinigung durch Solventextraktion erfolgen, wobei derart vorgereinigte und abgesäuerte Lösungen nach bekannten Verfahren wie z.B. Ionenaustausch (durch Solventextraktion oder mit Hilfe fester Ionenaustauscherharze) oder mittels Fällung zu den reinen Ausgangsstoffen für die Herstellung von Metallen oder Metallverbindungen weiterverarbeitet werden können.

Im folgenden wird die Erfindung beispielhaft erläutert, ohne daß hierin eine Einschränkung zu sehen ist.

### Beispiel

### Stufe 1 CO₂-Begasung, Vorneutralisation:

Eine alkalische Wolframatlauge aus einem Schmelzaufschluß von Hartmetallrückständen mit 156 g/l W, 160 mg/l Al, 88 mg/l Nb, 73 mg/l Ta und 42 mg/l Ti wurde ca. auf das doppelte Volumen mit Wasser verdünnt und über eine Glasfritte bis zu einem pH-Wert von 8,2 mit CO₂ begast. Dabei trat eine geringe Menge Niederschlag auf, der im wesentlichen aus Al, Ti, Ta, Nb und Si bestand und noch ca. 15 Gew.-% Wolfram enthielt.

### Stufe 2

### a) Nachreinigung mittels Ionenaustausch:

In der Folgestufe wurde nun das Filtrat der Vorneutralisation mit CO₂ mit einem Gehalt von ca. 70 g/l Wolfram und den Resten der Verunreinigungen über eine Austauscher-Säule mit 300 ml des schwach basischen Anionenaustauschers LEWATIT MP 62 (OH-Ionen-Form) der Fa. BAYER AG gegeben. Der Durchbruch der Austauschersäule war mit ca. 4 Litern der Lösung erreicht. Das wolframhaltige Raffinat wies eine Konzentration von 65 g/l Wolfram auf und war bis auf Spuren schon weitgehend frei von Verunreinigungen.

### b) Wolframat-Rückführung aus dem Filtrat:

Anschließend wurde der Anionen-Austauscher mit Natronlauge eluiert und dabei wieder in die OH-Form überführt. Das stark alkalische Eluat (ca. 1 1) enthielt in gelöster Form neben der Hauptmenge der mit der Aufschlußlauge eingebrachten Verunreinigungen noch ca. 55 g/l Wolfram. Diese Abfallauge wurde als geringe Teilmenge mit CO₂ begast und nach Abfiltrieren der ausgefällten Verunreinigungen in den Kreislauf vor der Stufe 1 zurückgeführt, um das mitgeführte Wolfram zurückzugewinnen.

### Stufe 3 Absäuerung der Wolframat-Lösungen, Membran-Elektrolyse:

Die gereinigte Lösung aus der Stufe 2 wurde durch eine Membran-Elektrolysezelle im Kreislauf gefahren (Membran-Werkstoff: Nafion 90209 der Fa. DU PONT). Bei einer anfänglichen Zellenspannung von 4,6 Volt wurde eine Stromstärke von 20 A erreicht (Stromdichte: 0,4 A/cm²). Nach 8 Stunden wurde bei schließlich 8 Volt auf der Anodenseite ein pH-Wert von ca. 2 erreicht und die Elektrolyse beendet. Der entweichende CO₂-Gasstrom wurde in diesem Versuchsmaßstab nicht aufgefangen und auch nicht in Stufe 1 zurückgeführt, obwohl das bei kontinuierlicher Betriebsführung praktikabel und sinnvoll wäre.

Auf der Kathodenseite resultierte eine Natronlauge mit ca. 100 g/l NaOH, die sich in der betrieblichen Praxis zum Eluieren und Regenerieren des Anionen-Austauschers oder zum Laugen der Rohstoffe verwenden läßt.

### Weiterverarbeitung der gereinigten Lösung:

Aus der sauren Wolframatlösung wurde anschließend auf bekannte Weise durch Solventextraktion mit sekundären Aminen ein sehr reines Ammoniumparawolframat gewonnen. Die Analyse dieses Endproduktes ergab 69,5 % Wolfram mit folgenden Verunreinigungen: < 3 ppm Al, < 5 ppm As, < 3 ppm Ca, < 2 ppm Co, < 1 ppm Cu, < 5 ppm P, < 10 ppm Si, 1 ppm K, 1 ppm V, 6 ppm Fe, 2 ppm Na.

## Patentansprüche

1. Verfahren zur Herstellung reiner Wolfram- und/oder Molybdän-Lösungen aus alkalischen Aufschlußlösungen, die mit Tantal, Niob, Titan, Zinn, Arsen, Phosphor, Silizium verunreinigt sind, wobei in einem ersten Schritt der pH-Wert der alkalischen Aufschlußlösungen bis zu einem Wert von 8 bis 10 abgesenkt und eingestellt wird, in einem zweiten Schritt die Verunreinigungen abgetrennt werden und einer dritten Stufe die gereinigte Lösung durch Membranelektrolyse mittels kationenselektiver Membranen weiterbehandelt wird, wobei auf der Kathodenseite NaOH zurückgewonnen wird, dadurch gekennzeichnet, daß in dem ersten Schritt die Einstellung des pH-Wertes durch CO2-Begasung erfolgt, wobei die Elemente Tantal, Niob, Aluminium, Titan und Zinn teilweise abgetrennt werden, in dem zweiten Schritt die vollständige Abtrennung der Restverunreinigungen, sowie von Arsen, Phosphor und Silizium mit einem Anionen-Austauscher bei pH 6 bis 10 durchgeführt wird und in der dritten Stufe CO2-Gas auf der Anodenseite der kationenselektiver Membranen zurückgewonnen wird.

2. Verfahren gemäß Anspruch 1, dadurch gekennzeichnet, daß in einer weiteren Stufe eine Nachreinigung der Metallatlösungen durch Solventextraktion durchgeführt wird.

## Claims

1. Process for the preparation of pure solutions of tungsten or molybdenum from alkaline decomposition solutions contaminated with tantalum, niobium, titanium, tin, arsenic, phosphorus or silicon, wherein, in a first step, the pH of the alkaline decomposition solutions is lowered and adjusted to a value of 8 to 10, the impurities are removed in a second step, and in a third stage the purified solution is further treated by membrane electrolysis by means of cation-selective membranes, NaOH being recovered on the cathode side, characterized in that, in the first step, the pH adjustment is carried out by gassing with CO₂, the elements tantalum, niobium, aluminium, titanium and tin being partly removed, in the second step the complete removal of the residual impurities and of arsenic, phosphorus and silicon is carried out with an anion exchanger at pH 6 to 10, and in the third stage CO₂ gas is recovered on the anode side of the cation-selective membranes.

2. Process according to claim 1, characterized in that in a further stage an after-purification of the metal late solutions is carried out by solvent extraction.

## Revendications

1. Procédé pour préparer des solutions de tungstène et/ou de molybdène pures à partir de solutions d'attaque alcaline contenant en impuretés du tantale, du niobium, du titane, de l'étain, de l'arsenic, du phosphore, du silicium, dans lequel, dans un premier stade opératoire, on abaisse le pH des solutions d'attaque alcaline jusqu'à un niveau de 8 à 10 et on le règle à ce niveau, dans un deuxième stade opératoire, on sépare les impuretés et, dans un troisième stade, on traite la solution purifiée par électrolyse sur membranes cationiques sélectives avec récupération de NaOH du côté de la cathode, ce procédé se caractérisant en ce que, au premier stade opératoire, on règle le pH par injection de CO₂ gazeux, ce qui provoque la séparation partielle des éléments tantale, niobium, aluminium, titane et étain, au deuxième stade opératoire, on sépare totalement les impuretés résiduelles, de même que l'arsenic, le phosphore et le silicium, à l'aide d'un échangeur d'anions à un pH de 6 à 10 et au troisième stade, on récupère le CO₂ gazeux du côté anode des membranes cationiques sélectives.

2. Procédé selon la revendication 1, caractérisé en ce que, dans un autre stade opératoire, on procède à une purification complémentaire des solutions de métallates par extraction par solvant.
